# EUROPEAN PATENT APPLICATION

(11) **EP 3 705 324 A1**
(43) Date of publication of application: **09.09.2020**
(21) Application number: 19160641.7
(22) Date of filing: 04.03.2019
(51) Int. Cl.: B60H 1/32, F25D 21/14, F24F 13/22, B61D 27/00, B60H 1/00

(54) **A SYSTEM AND A METHOD FOR A VEHICLE AIR-CONDITIONER**

(71) Applicant: Knorr-Bremse España S.A., 28906 Getafe (Madrid) (ES)
(72) Inventor: NURZIA, Giovanni, 28009 Madrid (ES); QUERENCIAS FERNANDEZ, Rafael, 28031 Madrid (ES)
(74) Representative: LifeTech IP Spies & Behrndt Patentanwälte PartG mbB

(57) **Abstract**

A system (100) for a vehicle air conditioner or an HVAC (heating, ventilation, air-conditioning) unit is disclosed. The air conditioner or HVAC unit comprises an evaporator section (1) for evaporating a refrigerant while possibly generating condensation water and a condenser section (2) for condensing and/or cooling at least part of the refrigerant. The system (100) includes a flow arrangement (110) for allowing condensation water (115) to flow from the evaporator section (1) to the condenser section (2); and means (120) for transferring heat from at least a part of the condenser section (2) to the condensation water (115), thereby improving the condensing and/or the cooling of the refrigerant in the condenser section (2).

## Description

The present invention relates to a system and a method for a vehicle air conditioner or a HVAC unit (heating ventilation air-conditioning unit) and, in particular, to a water-cooled condenser for a vehicle air conditioner and to a method to bring water condensate formed on an evaporator coil to a condenser section.

Vehicle air conditioners are able to maintain certain conditions of temperature, humidity and air quality in a specific compartment, like a passenger compartment in a train or in a car.

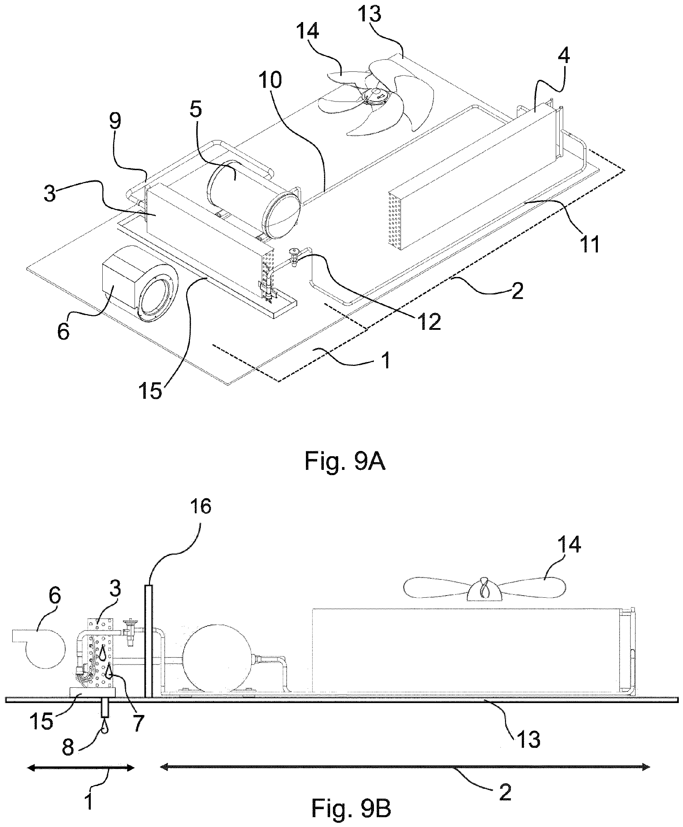

**Figs. 9A** and **9B** depict a conventional air-conditioning assembly including a compressor 5, a gas cooler/condenser heat exchanger 4, an expansion valve 12, an evaporator heat exchanger 3 and pipes 9, 10, 11 that connect sequentially the components creating a closed circuit for a refrigerant circulating through these components and being sequentially heated and cooled. Fans 6, 14, e.g. blowers or other means to move air through respective heat exchangers, are provided to transfer heat from the exemplary passenger compartment to the air conditioner and release is from there to an outside.

For simplicity in the description of the main functionalities of a vehicle air conditioner, two zones are defined in **Fig. 9A****,** the zone 1 where the evaporator heat exchanger 3 is located (hereinafter referred to as the evaporator section 1) and the zone 2 where the gas cooler/condenser heat exchanger 4 is located (hereinafter referred to as the condenser section 2). The compressor 5 can be located in either one of the two zones or out of them.

As shown in **Fig. 9B** the evaporator section 1 and the condenser section 2 may be separated by a thermal isolation 16 (e.g. a wall) to thermally decouple hot components of the condenser section 2 from cool components in the evaporator section 1. Moreover such barrier may prevent any interference between the airflow moved by the blower 6 and the fan 14. The evaporator section 1 may include the evaporator heat exchanger 3, at least one fan 6 and a water collector 15, whereas the condenser section 2 includes at least the gas cooler/condenser heat exchanger 4 and the compressor 5 and is configured to carry away heat from the refrigerant during its condensation to an outside via the fan 14.

The evaporator heat exchanger 3 is connected to the compressor 5, which is connected to the gas cooler/condenser heat exchanger 4, which in turn is connected to the expansion valve 12 and after that again to the evaporator heat exchanger 3 to close the circuit. The evaporator heat exchanger 3 evaporates a cooled refrigerant by absorbing heat from the surrounding (the passenger compartment) by using the fan 6. After being evaporated, the refrigerant is transferred as gas via a compressor suction line 9 to the compressor 5, where the gaseous refrigerant is compressed and thus heated. At the compressor outlet the refrigerant flows into the compressor discharge line 10, connecting the compressor outlet and condenser inlet, and enters the gas cooler/condenser heat exchanger 4, where the pressurized hot refrigerant is cooled and eventually partly or fully condensed using the fan(s) 14. In the gas cooler/condenser heat exchanger, the refrigerant is only cooled or the refrigerant is cooled and condensed (partly or fully). For example, in some specific HVAC systems, like the ones using CO₂ as a refrigerant, the "condenser heat exchanger" may act only as "gas cooler", because the refrigerant does not reach the condensation inside such heat exchanger. It stays in the gaseous form and it is simply cooled down.

The one or more fans 14 at the condenser section 2 force outdoor air through the condenser heat exchanger 4 to cool down the refrigerant flowing inside the condenser. At a condenser outlet the refrigerant flows inside the liquid line 11, connecting the condenser outlet and an expansion valve inlet, until it reaches the expansion valve 12 where it is laminated and decompressed, and thus further cooled. After the valve 12, the refrigerant enters the evaporator heat exchanger 3 and begins another cycle. All components can be arranged inside a frame, which serves as an envelope of the vehicle air conditioner. Such frame can have a bottom part, formed by metal sheets 13.

If for example heat has to be removed from passenger's compartment, the one or more fans 6 at the evaporator section 1 force a certain quantity of air coming from the compartment (hereinafter referred to as indoor air) together with a certain quantity of outdoor air (which can also be equal to zero) through the evaporator heat exchanger 3. Heat is removed from the air stream and transferred to the refrigerant, flowing inside the heat exchanger 3, to evaporate it. Depending on air humidity and temperature, as well as surface temperature of the evaporator heat exchanger 3, this process can cause water condensation 7 on heat exchanger's surface. This water 8 is generally drained out of the system and wasted.

On the other hand, the gas cooler/condenser heat exchanger 4 has to reject all the heat coming from the evaporator 3 and the compressor 5 and is thus usually the largest heat exchanger in the system. Attempts to reduce the size of this heat exchanger 4 can result in decreasing system cooling capacity and energy efficiency. Therefore, any mean to improve the heat dissipation in such component - keeping its size and weight within reasonable values - is of particular interest. It would reduce the energy needed by the air conditioner and does not increase the energy needed to move the system (traction energy consumption).

One possibility to improve the performance of a condenser heat exchanger is to use the water condensate formed in the evaporator heat exchanger and wet the surface of the condenser heat exchanger. One possibility is proposed in US 2010/307176 A, where water coming from the evaporator is collected and stored in a water tank. Subsequently, this water is pumped and sprayed through a nozzle placed onto the fins of the condenser coil.

Another attempt to make use of water condensate is described in CN 104748348 A, where the condensation water is collected in a water tray below the evaporator. Again, a pump takes the water from the water tray and forces it through a liquid to liquid heat exchanger to cool a liquid line coming from the condenser coil. After this, the water is pumped above the condenser coil and wets the condenser coil.

While these solutions achieve an improvement of the heat dissipation process at the condenser section, there are still remaining drawbacks in terms of reliability and maintainability. First, a pump is needed to move water from the evaporator zone. This is an additional component that in case of a failure, would stop bringing water to the condenser section losing their benefits. Moreover, a pump failure can result in the evaporator tray not being drained. Also, the spray nozzle is subjected to a possible clogging and therefore needs periodic maintenance. Likewise, a tank introduces additional weight with the potential risk of bacteria formation in stagnant water. Water stored in the tank tends to reach thermal equilibrium with the environment and with time can easily reach temperatures between 25 and 45°C, which are ideal for organisms like Legionella to grow and multiply. If this water is sprayed at the condenser section when an exemplary train (or another vehicle) is inside tunnels and/or stopped at station platforms, there is the risk of water droplets reaching passengers nearby the train.

According to these considerations, it is desirable to still make use of water condensate, as a matter to improve heat rejection in the condenser section, but at the same time to minimize or to eliminate the aforementioned drawbacks.

At least some of these problems of the conventional device are overcome by a system of claim 1 or a method according to claim 9. The dependent claims refer to further advantageous realizations of the subject matter of the independent claims.

The present invention relates to a system for a vehicle air conditioner or an HVAC unit. The air conditioner or the HVAC unit comprises an evaporator section for evaporating a refrigerant while possibly generating condensation water and a condenser section for cooling and eventually condensing at least part of the refrigerant. The system includes a flow arrangement for allowing condensation water to flow from the evaporator section to the condenser section and means for transferring heat from at least a part of the condenser section to the condensation water, thereby improving the cooling of the refrigerant in the condenser section.

The condenser section may be defined as the area where heat is transferred to the surrounding (warm or hot portion). The evaporator section may be defined as the area where heat is taken from the surrounding (cool portion of the air conditioner). Both sections are typically separated by a thermally isolating wall to thermally decouple both sections. The flow of the condensation water shall be arranged so that the condensation water flows freely without the aid of a dedicated pump or another device for driving the flow. The flow arrangement can include at least one pipe or a line or a channel or a system thereof. The refrigerant can be any working fluid or coolant (liquid or gaseous or a mixture thereof) to be used in an air conditioner as heat carrier.

Optionally, the evaporator section comprises an evaporator heat exchanger, an evaporator tray for collecting the condensation water generated by the evaporator heat exchanger and an evaporator fan for supplying cooled air, the condenser section includes at least one condenser fan. Then, the flow arrangement may provide a flow path connecting the evaporator tray with at least one component of the condenser section, wherein along the flow path (e.g. a pipe) the condensation water is driven by at least one of the following: a height difference (thus gravity driven), a differential pressure created between the condenser section and the evaporator section. The differential pressure may be caused by at least an evaporator fan and/or the at least one condenser fan. For example, the condenser fan and/or the evaporator fan may increase a differential pressure between the condenser section and the evaporator section which can be used to support the flow of the condensation water towards the condenser section.

The air conditioner or the HVAC unit may comprise a compressor and an expansion valve. Then, the flow arrangement may be configured to bring the condensation water into a direct contract with at least one part arranged, in respect to the (circulating) refrigerant, downstream of the compressor and upstream of the expansion valve.

Optionally, the at least one part includes one or more of the following: a (compressor) discharge line, a gas cooler/condenser heat exchanger, a condenser liquid line, a condenser tray or at least a part thereof.

Optionally, the at least one part in (part of) the compressor discharge line being at least one of the following: a connecting pipe, a finned tube, a series of pipes, a multichannel pipe.

Optionally, the at least one part includes (part of) a condenser liquid line being at least one of the following line types: a connecting pipe, a finned tube, a series of pipes, a multichannel pipe.

The vehicle air conditioner or the HVAC unit may be supported by at least one structural frame member. Then, the at least one part may be integrated in the at least one structural frame member.

Further embodiments relate to a vehicle, in particular to a railway vehicle, with an air conditioner or an HVAC unit, wherein the air conditioner or the HVAC unit includes a system as defined before.

Further embodiments relate to a method for supporting a condensation and/or a cooling of a refrigerant in a condenser section of a vehicle air conditioner, the air conditioner further comprising an evaporator section for evaporating the refrigerant while possibly generating the condensation water. The method includes:
- carrying condensation water freely from the evaporator section to the condenser section; and
- transferring heat from at least a part of the condenser section to the condensation water, thereby supporting the condensation and/or the cooling of the refrigerant in the condenser section.

For example, the step of carrying condensation water includes establishing a gravity driven flow of the condensation water and/or establishing pressure-driven flow of the condensation water. The pressure driven flow may be established by using an evaporator fan which is upstream of the evaporator heat exchanger and/or a condenser fan which is downstream of the gas cooler/condenser heat exchanger.

At least some of the aforementioned problems are mitigated by bringing water condensate originated in the evaporator heat exchanger in direct contact to any part of the gas cooler/condenser heat exchanger, including the discharge line(s) and/or the liquid line(s). Water condensate is usually at lower temperature than the refrigerant flowing inside the gas cooler/condenser heat exchanger and the condenser connecting lines and is therefore able to cool down the refrigerant. Moreover, if an adequate contact surface is disposed between water and condenser lines, water can evaporate, further cooling down the refrigerant.

Therefore, embodiments of the present invention provide means to improve the heat dissipation of the gas cooler/condenser heat exchanger, increasing cooling system capacity and/or system energy efficiency, without a significant increase of the heat exchanger size and weight.

Some examples of the systems and/or methods will be described in the following by way of examples only, and with respect to the accompanying figures, in which:
- Fig. 1: depicts a system according to an embodiment of the present invention.
- Fig. 2: depicts an overview on the vehicle air conditioner according another embodiment.
- Fig. 3: depicts an overview on the vehicle air conditioner according yet another embodiment.
- Fig. 4: depicts an overview on the vehicle air conditioner according yet another embodiment.
- Fig. 5: depicts an overview on the vehicle air conditioner according yet another embodiment.
- Fig. 6: depicts an overview on the vehicle air conditioner according yet another embodiment.
- Fig. 7: depicts an overview on the vehicle air conditioner according yet another embodiment.
- Fig. 8A,8B: depict overviews on the vehicle air conditioners according to further embodiments.

- Fig. 9A,9B: depict a side view and an overview on a conventional vehicle air conditioner.

The following description of the exemplary embodiments illustrates main features of the present invention: how the condensate water shown in Fig. 9A (originated in the evaporator section 1) can be transferred to the condenser section 2 and how this water can be used in the condenser section 2 to improve heat dissipation.

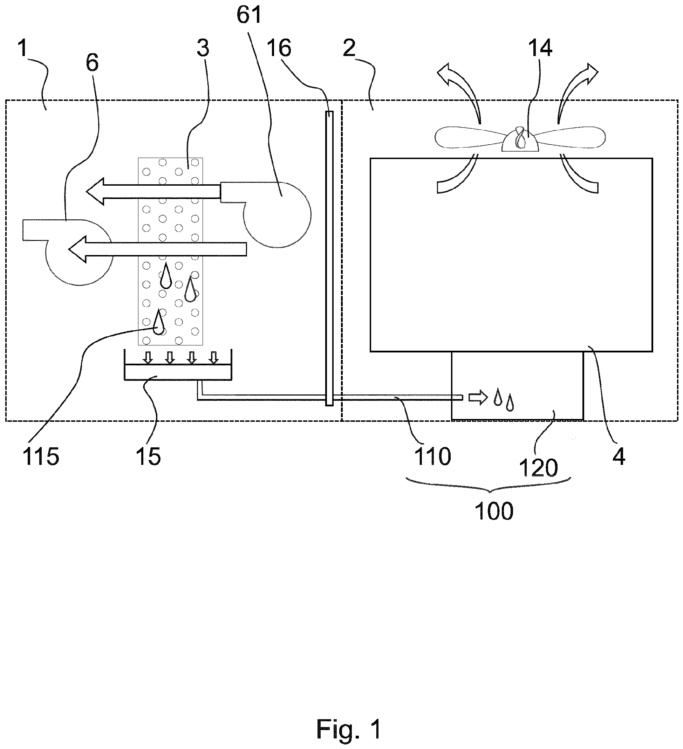

Fig. 1 illustrates a system 100 according to an embodiment of the present invention, wherein the vehicle air-conditioner comprises an evaporator section 1 and a condenser section 2 which are thermally isolated by an exemplary wall 16. The evaporator section 1 comprises an evaporator heat exchanger 3, one or more evaporator fans 6, 61 and an evaporator tray 15. The evaporator fans 6, 61 can be arranged upstream of the evaporator heat exchanger 3 (i.e. the fan 61) or downstream of the evaporator heat exchanger 3 (i.e. the fan 6) so that the evaporator fans 6, 61 can push the air through the evaporator heat exchanger 3 (e.g. by the fan 61) or suck air from the evaporator heat exchanger 3 (e.g. by fan 6). The air is cooled by the evaporator heat exchanger 3 resulting in possible condensation water 115 which is collected by the evaporator tray 15 under the evaporator heat exchanger 3 (hereinafter referred to as evaporator water tray).

The condenser section 2 includes at least one condenser fan 14 and the gas cooler/condenser heat exchanger 4. The wall 16 avoids air transfer between the evaporator and the condenser section 1, 2. To bring the water 115 from the evaporator section 1 to the condenser section 2, the use of a pump can be avoided provided the tray 15 is higher compared to the height of the drainage pipe outlet. In particular, there should be a sufficient height difference to promote gravity-driven water flow.

According to embodiments of the present invention, a flow arrangement 110 (drainage pipe), which in the simplest case represents one or more pipes, is arranged between the evaporator section 1 and the condenser section 2 to bring the condensation water 115 from the evaporator section 1 to the condenser section 2. In the condenser section 2 means for transferring heat 120 are provided to cool down at least one component of the condenser section 2 by using the condensation water 115.

According to embodiments of the present invention the water 115 shall flow without a dedicated pump arranged along the flow path 110. For example, the condensation water 115 can flow to the condenser section 2 only due to the height difference between the evaporator tray 15 and the means for transferring heat 120 in the condenser section 2.

According to another embodiment, the flow of the condensation water 115 can also be driven due to a differential pressure difference between the evaporator section 1 and the condenser section 2 because the evaporator fans 6, 61 blow air out of the evaporator section 1. For example, the upstream fan 61 generates an increased pressure within the evaporator section 1, whereas the condenser fan 14 sucks air out of the condenser section 2 and thus decreases the pressure inside the condenser section 2. Therefore, the pressure in the condenser section 2 may become sufficiently lower compared to the pressure in the evaporator section 1. According to embodiments, this differential pressure may be used to drive the water flow from the evaporator section 1 to the condenser section 2. To increase this effect, the evaporator fan 61 upstream from evaporator heat exchanger 3 is sufficiently strong to pressurize the evaporator water tray zone to promote the water flow in the drainage pipe 110.

It is understood that any of the designs related to the fans (upstream fan 61, downstream fan 6 or both) and height differences can be combined, to ensure that water drainage takes place at any working conditions.

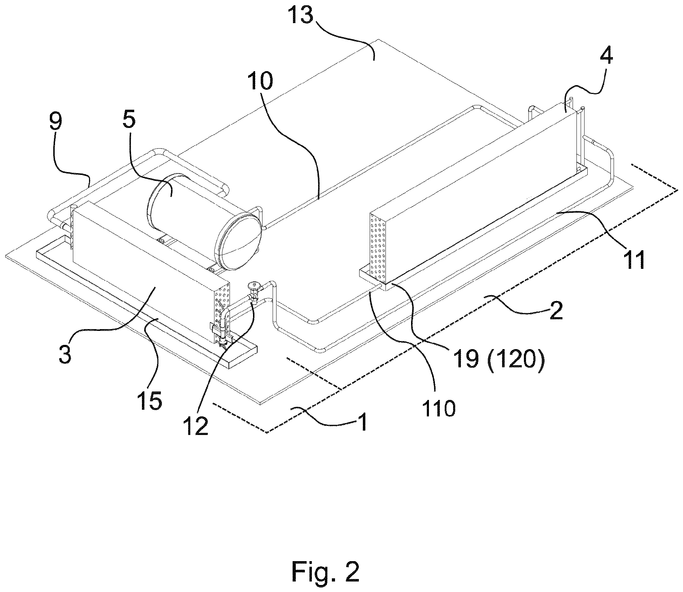

**Fig. 2** depicts overview on the exemplary vehicle air conditioner with the evaporator heat exchanger 3, the gas cooler/condenser heat exchanger 4 arranged on a support member 13 (for example a metal sheet). The evaporator heat exchanger 3 is connected via a compressor suction line 9 to a compressor 5. The compressor 5 is connected to the condenser heat exchanger 4 via a compressor discharge line 10. The gas cooler/condenser heat exchanger 4 is connected to an expansion valve 12 via a condenser liquid line 11, and the expansion valve 12 is connected again to the compressor heat exchanger 3.

The compressor heat exchanger 3 belongs to the evaporator section 1, whereas the compressor 5 and the gas cooler/condenser heat exchanger 4 belong here to the condenser section 2. However, the compressor 5 can also be located in the evaporator section 1 or out of both the evaporator and condenser section In addition, below the evaporator heat exchanger 3 the evaporator tray 15 is formed to collect the condensation water 115 (not shown in Fig. 2). This water 115 is transferred to a condenser tray 19 under the gas cooler/condenser heat exchanger 4 via the drainage pipe 110. Again, the condensation water 115 may be driven to the condenser tray 19 by gravity (i.e. a height difference between both trays 15, 19) or via the differential pressure between the evaporator section 1 and the condenser section 2. Thus, the water is transferred from the evaporator section 1 to the condenser section 2 by any of the methods described with Fig. 1. In this embodiment the condenser tray 19 is at least part of the means for transferring heat 120.

As for the conventional air conditioner, the compressor 5 is configured to compress the evaporated refrigerant coming from the evaporator heat exchanger 3 via the compressor suction line 9. After compressing the gaseous refrigerant, the hot compressed refrigerant is carried to the gas cooler/condenser heat exchanger 4 via the compressor discharge line 10. In the gas cooler/condenser heat exchanger 4, heat from the compressed refrigerant is transferred to the surrounding, thereby cooling the pressurized refrigerant which depending on the working conditions of the cycle can either stays in gaseous form or at least partly condenses and is afterwards carried by the condenser liquid line 11 to the expansion valve 12. In the expansion valve 12, the pressurized refrigerant is decompressed and thus further cooled. Finally, the decompressed liquid refrigerant is evaporated in the evaporator heat exchanger 3 by taking up heat from the surrounding (which is thus cooled).

In this exemplary embodiment the condensate water 115 is brought in direct contact with the gas cooler/condenser heat exchanger 4 and flows to the condenser tray 19 disposed under the gas cooler/condenser heat exchanger 4. Hence, a lower section of the gas cooler/condenser heat exchanger 4 is wetted so that the heat transfer dissipation is increased in this section. After being heated, the condensation water overflows, for example, from the top of the condenser tray 19 and drops onto frame bottom 13 and may be drained out of the unit in the condenser section 2.

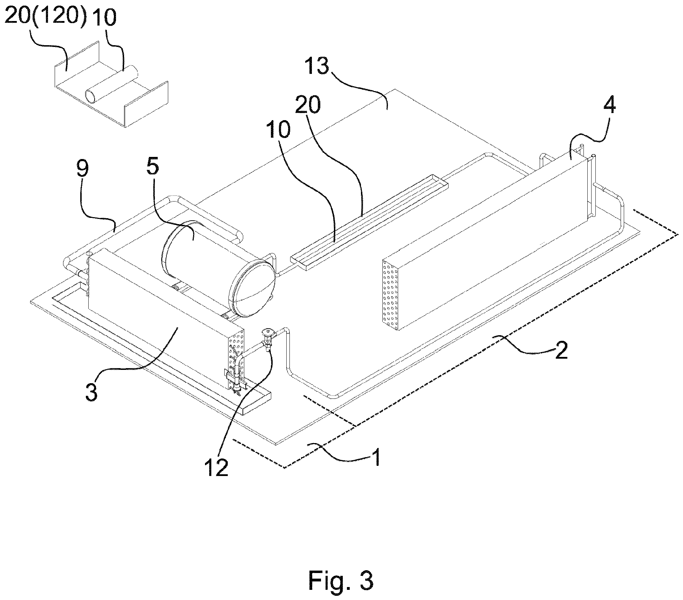

**Fig. 3** depicts another embodiment according to the present invention, wherein the condensation water 115 (not shown in Fig. 3) is transferred from the evaporator tray 15 (the corresponding drainage pipe 110 is not shown) to another tray 20 disposed under the compressor discharge line 10. Therefore, the condensation water 115 gets into direct contact to the compressor discharge line 10 and thus decreases the temperature of the compressed refrigerant inside the compressor discharge line 10 before the refrigerant enters the gas cooler/condenser heat exchanger 4. In this embodiment the other tray 20 is the means for transferring heat 120.

All other components are arranged in the same way as in Fig. 1 or Fig. 2 so that there is no need to repeat their description. Although not shown, also in this embodiment the condenser tray 19 may be present to receive part of the condensation water 115 to cool down the gas cooler/condenser heat exchanger 4.

Again, the condensation water 115 may be transferred from the evaporator section 1 to the condenser section 2 by any of the methods described previously (driven by gravity or by differential pressure).

The compressor discharge line 10 can be a simple connecting pipe as depicted in the enlarged view, or can be modified to enhance the heat transfer between air and the piping and/or water and the piping. Possible ways of modifying the discharge line 10 to improve heat transfer will be described with the next figures.

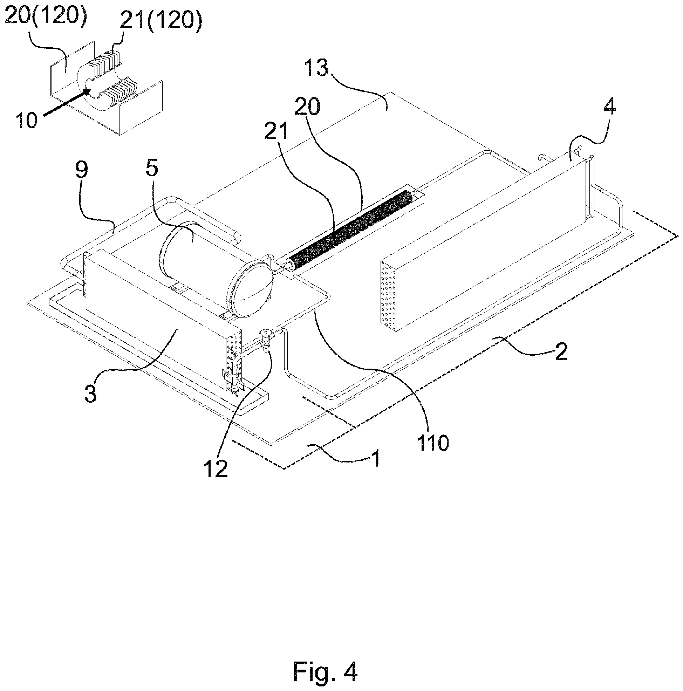

**Fig. 4** depicts an embodiment, wherein the compressor discharge line 10 includes fins 21, thereby improving the heat exchange between the condensation water 115 within the other tray 20 and the compressor discharge line 10. In this embodiment the fins 21 and the tray 20 are the means for transferring heat 120 and the drainage pipe 110 is (part of) the flow arrangement 110.

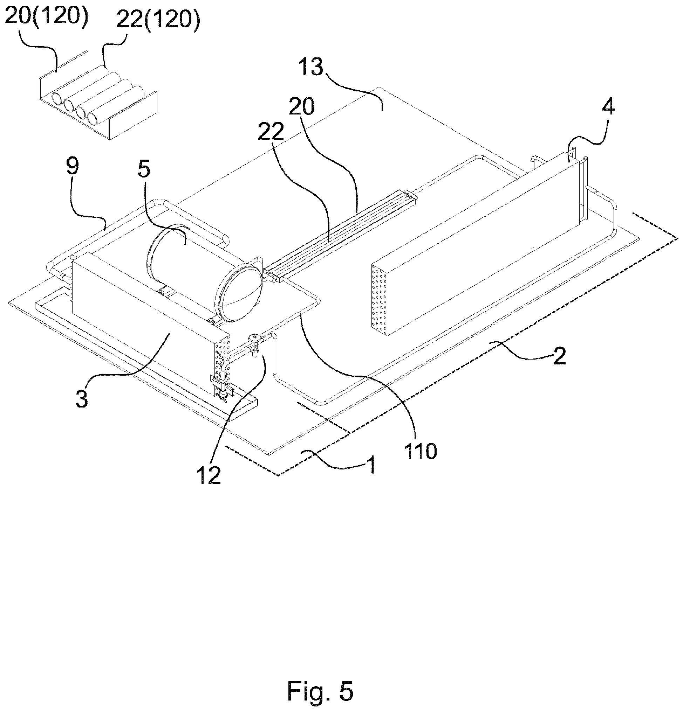

**Fig. 5** depicts an embodiment, wherein the compressor discharge line 10 is split into a plurality of pipes 22 which are arranged along the tray 20 and get into direct contact with the condensation water 115 within the other tray 20. As a result, the contact area between air and/or water and the compressor discharge line 10 is increased. In this embodiment the pipes 22 together with the tray 20 represent the means for transferring heat 120.

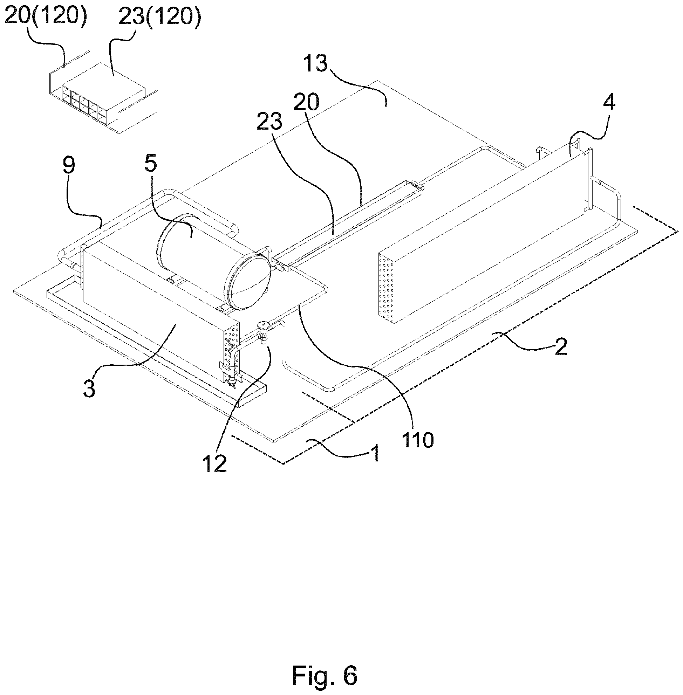

Yet another embodiment is shown in **Fig. 6****,** wherein the compressor discharge line 10 is split in a multichannel pipe 23. The multichannel pipe 23 may be formed as an array of pipes which are distributed horizontally and vertically and which are again in direct contact with the condensation water 115 in the tray 20.

It is understood that here and in the other embodiments, the trays 20 can be open or closed and that the compressor discharge line 10 can be surrounded completely by the condensation water 115. In this embodiment the multichannel pipes 23 together with the tray 20 represent the means for transferring heat 120 and the drainage pipe 110 is included in the flow arrangement 110.

In addition, the multichannel pipe 23 (and similarly also the plurality of pipes 22 and fins 21) may comprise copper or aluminum and may be formed as extrusion or other means to create a tube with several channels inside.

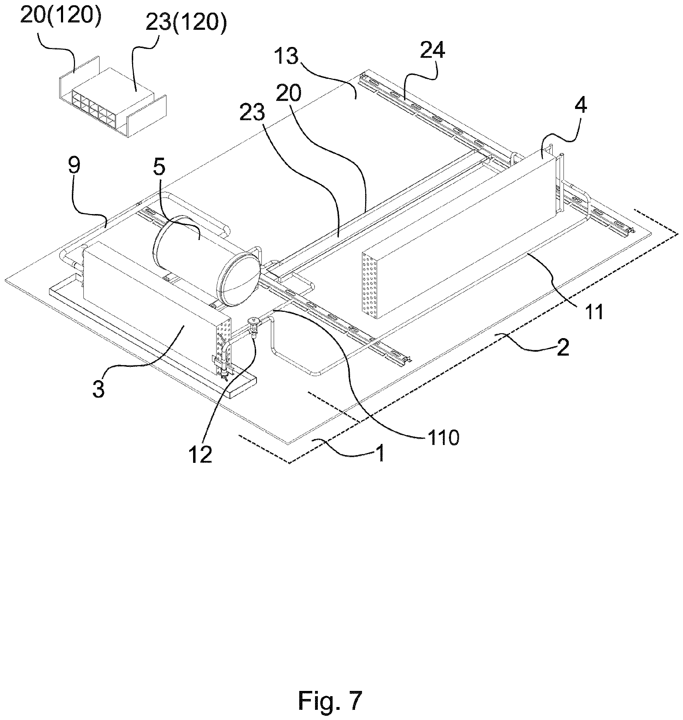

**Fig. 7** depicts an embodiment, wherein the compressor discharge line 10 with or without fins 21 or being arranged as a plurality of pipes 22 or as a multi-channel pipe 23 is formed at least partly within a support structure of the vehicle air conditioner (for example the bottom beams 24) which provide a reinforcement of the support member 13. In this embodiment the multichannel pipes 23 together with the tray 20 represent the means for transferring heat 120.

The same setup may be implemented for the condenser liquid line 11, which may likewise be cooled by the condensation water 115. The multichannel pipe 23, for example, can be integrated as structural member of the vehicle air conditioner frame. In this way, the compressor discharge line 10 and/or the condenser liquid line 11 may serve multiple purposes:
- it carries the refrigerant from the compressor 5 to the condenser heat exchanger 4 or from there to the expansion valve 12,
- it cools down the refrigerant by exchanging heat with air and/or with water,
- it creates a beam 23 that contributes to the structural reinforcement of the frame.

Furthermore, the multichannel 23 can be connected to other structural members of the vehicle air conditioner frame, such as bottom beams 24 and/or fixed to the frame bottom 13 by soldering or riveting to increase bottom metal sheet stiffness.

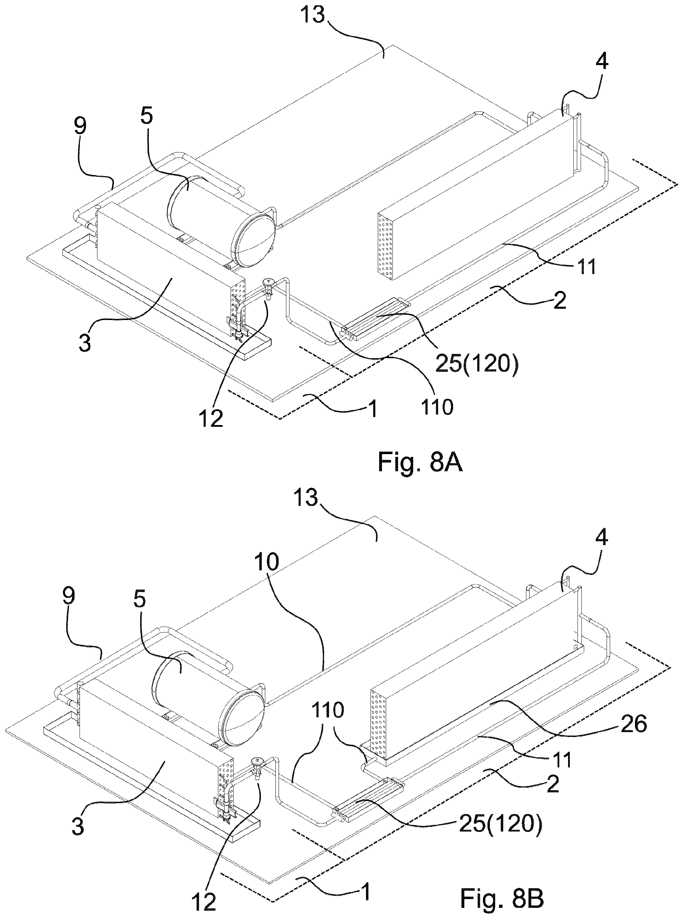

**Fig. 8A** and **8B** depict an embodiment, wherein the condenser liquid line 11 is cooled by the condensation water. For this, same arrangements as described in combination in Figs. 3 to 6 can be used.

In the embodiment illustrated in **Fig. 8A****,** the condensate water 115 is brought in direct contact with the condenser liquid line 11, which may be split into a plurality of pipes 25 (representing part of the means for transferring heat 120). The condenser liquid line 11 is split into multiple pipes 25 to enhance heat transfer. Any other arrangement similar to the ones shown for the compressor discharge line 10 in Fig 4 to Fig.7 can be used to increase the heat transfer surface (finned tube, multi channels etc.).

For example, in the embodiment illustrated in **Fig. 8B****,** the setups of Fig. 2 and Fig. 8A, are combined together. The condensate water 115 is thus brought first in contact with the condenser liquid line 11/multiple pipes 25 and subsequently with the bottom section of the gas cooler/condenser heat exchanger 4.

Also for these embodiments, the condensation water 115 may again be transferred from the evaporator section 1 to the condenser section 2 by any of the methods described in Fig 1 (driven by gravity and/or by a differential pressure).

It is understood that the various possibilities to use the condensation water 115 to cool down at least one of the components arranged in the condensation section 2 can be combined with each other. In addition, the condensation water 115 can be split in accordance with the respective heat in the condensation section 2. For example, the compressor discharge line 10 having the highest temperature may receive most of the condensation water 115, wherein the gas cooler/condenser heat exchanger 4 and the liquid lines 11 may receive less condensation water 115 from the evaporator tray 15 in the evaporation section 10. But this may be setup as desired. Also, there is no restriction for the order, i.e. which component receives first the condensation water 115 and which at last.

Advantageous embodiments relate, in particular, to the following subject matters:
A vehicle air conditioner, where condensate water 115 originated in the evaporator section 1 is transferred to condenser section 2.

The water 115 may be transferred from the evaporator to the condenser section 1, 2 by means of a height difference between water evaporator tray and drainage pipe outlet 110, or by differential pressure created between the evaporator and the condenser section 2 by a fan 61 upstream the evaporator tray 15, or by a combination of two or more of the aforementioned methods.

The water 115 may be transferred to the condenser section 2 and brought into direct contact with any part of the circuit which is carrying refrigerant within the compressor outlet and the expansion valve 12. This portion of the circuit comprises, but is not limited to, the discharge line 10, the gas cooler/condenser heat exchanger 4 and the condenser liquid line 11.

The water 115 may be brought into direct contact with the compressor discharge line 10 and the discharge line 10 is either a simple connecting pipe, or a finned tube 21, or a series of pipes 22 or a multichannel pipe 23.

The water 115 may be brought into direct contact with the condenser liquid line 11 and the liquid line 11 is either a simple connecting pipe, or a finned tube, or a series of pipes or a multichannel pipe.

The water 115 may be brought into direct contact with gas cooler/condenser heat exchanger 4.

The water 115 may be brought into direct contact with compressor discharge line 10, the discharge line 10 is a pipe or a multichannel pipe 23 and the discharge line 10 is integrated as a structural member of the vehicle air conditioner frame.

The water 115 may be brought into direct contact with condenser liquid line 11, the liquid line 11 is a pipe or a multichannel pipe and the liquid line is integrated as a structural member of the vehicle air conditioner frame.

The description and drawings merely illustrate the principles of the disclosure. It will thus be appreciated that those skilled in the art will be able to devise various arrangements that, although not explicitly described or shown herein, embody the principles of the disclosure and are included within its scope.

Furthermore, while each embodiment may stand on its own as a separate example, it is to be noted that in other embodiments the defined features can be combined differently, i.e. a particular feature descripted in one embodiment may also be realized in other embodiments. Such combinations are covered by the disclosure herein unless it is stated that a specific combination is not intended.

### LIST OF REFERENCE SIGNS

- 1: evaporator section
- 2: condenser section
- 3: evaporator heat exchanger
- 4: gas cooler/condenser heat exchanger
- 5: compressor
- 6, 61: evaporator fan
- 9: compressor suction line
- 10: compressor discharge line
- 11: condenser liquid line
- 12: expansion valve
- 13: support member (metal sheet)
- 14: condenser film
- 15: evaporator tray
- 16: thermal isolation/wall
- 19: condenser tray
- 20: another tray
- 21: fins
- 22: plurality of pipes
- 23: multichannel pipe
- 24: support structure/bottom beams
- 25: plurality of liquid lines
- 110: flow arrangement
- 115: condensation water
- 120: means for transferring heat

## Claims

1. A system (100) for a vehicle air conditioner or an HVAC (heating, ventilation, air-conditioning) unit, the air conditioner or HVAC unit comprising an evaporator section (1) for evaporating a refrigerant while possibly generating condensation water and a condenser section (2) for condensing and/or cooling at least part of the refrigerant,
**characterized by:**
- a flow arrangement (110) for allowing condensation water (115) to flow from the evaporator section (1) to the condenser section (2); and
- means (120) for transferring heat from at least a part of the condenser section (2) to the condensation water (115), thereby improving the condensing and/or the cooling of the refrigerant in the condenser section (2).

2. The system (100) according to claim 1, wherein the evaporator section (1) comprises an evaporator heat exchanger (3), an evaporator tray (15) for collecting the condensation water (115) generated by the evaporator heat exchanger (3) and an evaporator fan (6, 61) for supplying cooled air, the condenser section (2) including at least one condenser fan (14)
**characterized in that**
the flow arrangement (110) provides a flow path connecting the evaporator tray (15) with at least one component of the condenser section (2), wherein along the flow path the condensation water is driven by at least one of the following: a height difference, a pump, a differential pressure created between the condenser section (2) and the evaporator section (2) by the evaporator fan (6, 61) and/or the evaporator fan (6, 61) combined with the at least one condenser fan (14) or the at least one condenser fan (14).

3. The system (100) according to claim 1 or claim 2, wherein the air conditioner or the HVAC unit comprises a compressor (5) and an expansion valve (12),
**characterized in that**
the flow arrangement (110) is configured to bring the condensation water (115) into a direct contact with at least one part (4, 10, 11, 19) arranged, in respect to the refrigerant, downstream the compressor (5) and upstream the expansion valve (12).

4. The system (100) according to claim 3,
**characterized in that**
the at least one part (4, 10, 11, 19) includes one or more of the following: a discharge line (10), a condenser heat exchanger (4), a condenser liquid line (11), a condenser tray (19) or at least a part thereof.

5. The system (100) according to claim 3 or claim 4,
**characterized in that**
the at least one part includes a compressor discharge line (10) being at least one of the following: a connecting pipe, a finned tube, a series of pipes, a multichannel pipe.

6. The system (100) according to claim 4 or claim 5,
**characterized in that**
the at least one part includes a condenser liquid line (11) being at least one of the following line types: a connecting pipe, a finned tube, a series of pipes, a multichannel pipe.

7. The system (100) according to one of claims 3 to 6, wherein the vehicle air conditioner or the HVAC unit is supported by at least one structural frame member,
**characterized in that**
the at least one part is integrated in the at least one structural frame member.

8. A vehicle, in particular a railway vehicle, with an air conditioner or an HVAC unit,
**characterized in that**
the air conditioner or the HVAC unit includes a system (100) according to one of the preceding claims.

9. A method for supporting a condensing and/or a cooling of a refrigerant in a condenser section (2) of a vehicle air conditioner or HVAC unit, the air conditioner or HVAC (heating, ventilation, air-conditioning) unit further comprising an evaporator section (1) for evaporating the refrigerant while possibly generating the condensation water (115),
**characterized by:**
- carrying condensation water (115) freely from the evaporator section (1) to the condenser section (2); and
- transferring heat from at least a part of the condenser section (2) to the condensation water (115), thereby supporting the condensation and/or the cooling of the refrigerant in the condenser section (2).

10. The method according to claim 9,
**characterized in that**
the step of carrying condensation water (115) includes establishing a gravity driven flow of the condensation water (115) and/or establishing pressure-driven flow of the condensation water (115).

11. The method according to claim 10,
**characterized in that**
the pressure driven flow is established by using an evaporator fan (61) which is upstream to evaporator heat exchange (3) and/or the evaporator fan (6, 61) combined with the at least one condenser fan (14) or the at least one condenser fan (14) which is downstream of the gas cooler/condenser heat exchanger (4).
